# EUROPÄISCHE PATENTANMELDUNG

(11) **EP 1 529 476 A1**
(43) Veröffentlichungstag der Anmeldung: **11.05.2005**
(21) Anmeldenummer: 04026012.7
(22) Anmeldetag: 03.11.2004
(51) Int. Cl.: A47J 45/06

(54) **Behälter zum Zubereiten von Speisen**

(30) Priorität: 04.11.2003 IT MI20032118
(71) Anmelder: BALLARINI PAOLO & FIGLI S.p.A., 46017 Rivarolo Mantovano (MN) (IT)
(72) Erfinder: Garziera, Roberto Vincenzo, 22070 Appiano Gentile (Como) (IT)
(74) Vertreter: Mayer, Hans Benno, Dipl.-Ing.

(57) **Zusammenfassung**

Der Behälter zum Zubereiten von Speisen besteht aus wenigstens einem Behälter (11), welcher Zylinderform aufweist, und besitzt wenigstens zwei Halterungen (30), die an den Wandungen des genannten Behälters (11) angeordnet sind, mit wenigstens zwei Griffen (20), die mit den Halterungen (30) gelenkig verbunden sind, um somit auf einfache Weise in wenigstens zwei Lagen angeordnet zu werden, wobei eine Lage in angehobener Stellung vorgesehen ist, in der die Griffe radial von den Wandungen des genannten Behälters (11) abstehen, und eine Lage in abgesenkter Stellung, in der die Griffe längs der Wandungen angeordnet sind, wobei es ferner möglich ist, den genannten Behälter im Innern eines anderen Behälters mit entsprechender Form und geringfügig größeren Abmessungen unterzubringen, unter Vorsehung wenigstens einer Vorrichtung zum Arretieren der Handgriffe (20) in wenigstens einer angehobenen Lage.

## Beschreibung

Die bekannten Behälter zum Zubereiten von Speisen nehmen unterschiedliche Formen an, einige von diesen Behälter, die allgemein gebräuchlich sind, bestehen zum Beispiel aus Pfanne, Bräter, Kochtopf, Kasserolle.

Die vorstehende Erfindung bezieht sich auf jedes dieser Kochgefäße, auch wenn diese unter Umständen unterschiedliche Form aufweisen und eine andere Art von Kochgefäß betreffen; wichtig ist dabei, dass sich die Behälter auf ein Kochgefäß beziehen, das aus wenigstens einem Behälter und wenigstens zwei Handgriffen besteht.

Aus Gründen der Einfachheit werden in dieser Beschreibung als gleichwertige Ausdrücke "Kochtopf" und "Behälter zum Zubereiten von Speisen" verstanden; Kochtöpfe bestehen meistens aus einem Behälter, der mit einem oder mehreren Griffen versehen ist, die radial von den Wandungen des Gefäßes abstehen und mit diesem fest verbunden sind.

Des öfteren verhindern diese abstehenden Griffe eine ordnungsgemäße und platzsparende Anordnung der Kochtöpfe selbst. Dies tritt zum Beispiel während des Verpackens und dem Versand der Kochtöpfe oder bei Anordnen derselben in einer Geschirrspülmaschine, in einem Kühlschrank, in Küchenmöbeln oder in Regalen auf.

Ein Nachteil der beim Vorhandensein von abstehenden Handgriffen in besonders augenscheinlicher Weise auftritt, ist in der Stapelbarkeit der Kochtöpfe zu sehen, genauer gesagt in der Möglichkeit, einen Kochtopf in einem anderen Kochtopf zu verstauen.

Eine Vielzahl von Kochtöpfen, die den herkömmlichen Anforderungen in einer Küche entsprechen, besteht üblicherweise aus einer gewissen Anzahl von Kochtöpfen, auch Kasserollen genannt, welche entsprechende Form, meist zylindrische Form, aufweisen und unterschiedliche Durchmesser haben, beginnend mit einem kleinsten Durchmesser, die allmählich zunehmen, und in kleinem Abstand zueinander stehen. Lediglich als Beispiel, das keine Einschränkung darstellt, kann eine Topfbatterie, die aus einer Anzahl von Kasserollen besteht, einen Durchmesser von 120, 150, 180, 210, 240, 280 und 320 mm aufweisen.

Es ist bekannt, dass diese Kochtöpfe üblicherweise mit zwei Handgriffen versehen sind, die radial abstehen und dies mit Abmessungen zum Beispiel zwischen 40 und 80 mm.

Einige Kochtöpfe, welche die Topfbatterie bilden, könnten mit zunehmenden Abmessungen im Innenraum des folgenden Kochtopfes angeordnet sein, wenn man dabei ausschließlich die Abmessungen des Kochtopfes berücksichtigen würde; dies Ineinanderstapeln ist aber nicht möglich, da jeder Kochtopf mit radial abstehenden Handgriffen versehen ist.

Eine bekannte Lösung, die es ermöglicht, die genannten Nachteile zu vermeiden, besteht darin, den Kochtopf mit abnehmbaren Handgriffen zu versehen. Diese Lösung weist jedoch Nachteile auf. Das Anbringen der Handgriffe erfolgt häufig in unzuverlässiger Weise. Die Halterungen sowie die Handgriffe weisen ein erhebliches Bauvolumen auf und es ist erforderlich, die Kochtöpfe und die Handgriffe in unterschiedlicher Weise zu handhaben.

Eine weitere Lösung, die dazu dient, die Nachteile der erheblichen Abmessungen aufgrund von abstehenden Handgriffen zu lösen, besteht darin, Kochtöpfe, die im gewerblichen Küchenbetrieb Einsatz finden, mit Handgriffen zu versehen, die gelenkig gelagert sind. Diese Handgriffe bestehen üblicherweise aus Vorrichtungen aus Metall, die mit ihren Enden über Scharniere an der Kochtopwand befestigt sind; diese sind unter Wirkung des eigenen Gewichtes absenkbar und es ist notwendig, diese Handgriffe anzuheben, sofern man diese ergreifen will. Diese Lösung findet häufig Verwendung zum Beispiel bei Brätern für eine Röhre, die rechteckige Form aufweisen. Diese bekannte Ausführungsform ist aber in der Handhabung sehr umständlich und unsicher für den Einsatz in gewerblichen Küchen.

Aufgabe der vorstehenden Erfindung ist es, die vorher angeführten Nachteile zu vermeiden, besonders den Nachteil, der darin besteht, einen Kochtopf für gewerbliche Verwendungen zu schaffen, der mit zwei Handgriffen versehen ist, welche dauerhaft eine angehobene Stellung einnehmen können, und bei dem die Griffe radial von den Wandungen des Gefäßes abstehen und somit eine bequeme und sichere Handhabung erlauben, und ferner eine abgesenkte Lage einnehmen können, in der die Handgriffe möglichst nahe an der Behälterwand angeordnet sind und wesentlich den Platzbedarf vermindern und des weiteren ermöglichen, ein erstes Kochgefäß im Inneren eines weiteren Kochgefäßes anzuordnen, welches identische Form aufweist, aber Abmessungen hat, die um weniges größer sind als die des aufzunehmenden inneren Kochgefäßes.

Eine weitere Aufgabe der vorstehenden Erfindung ist darin zu sehen, einen Kochtopf für gewerbliche gastronomische Verwendung zu schaffen, der über zwei gelenkig angeordnete Handgriffe verfügt, die einfach in ihrem Aufbau sind und einen geringen Kostenaufwand mit sich bringen.

Diese und weitere Aufgaben der vorstehenden Erfindung werden durch einen Kochtopf für gewerblichen Einsatz gemäß den Merkmalen des Anspruches 1 gelöst.

Weitere Merkmale sind den Unteransprüchen zu entnehmen.

Die Merkmale und Vorteile des Kochtopfes für gewerblichen Einsatz entsprechend der vorstehenden Erfindung können der folgenden Beschreibung entnommen werden, die ein Ausführungsbeispiel in nicht einschränkender Weise beschreibt. Desweiteren ist die Erfindung den beigefügten schematischen Zeichnungen zu entnehmen:
Figur 1 zeigt in perspektivischer Ansicht einen gelenkig angeordneten Handgriff, der an einem Teil eines rechteckigen Bräters für eine Röhre angebracht ist, entsprechend dem bekannten Stand der Technik.
Figur 2 zeigt in perspektivischer Darstellung einen Kochtopf für gewerblichen, gastronomischen Einsatz entsprechend der Erfindung, wobei einer der Handgriffe in angehobener Stellung und der andere Handgriff in abgesenkter Stellung dargestellt ist.
Figur 3 zeigt eine Draufsicht des Kochgefäßes nach Figur 2, wobei in dieses Kochgefäß ein entsprechender Kochtopf mit kleineren Abmessungen eingesetzt ist.
Figur 4 zeigt im Schnitt entlang der Mittellinie, die die Handgriffe verbindet, das Kochgefäß nach Figur 2, in das ein entsprechender Kochtopf mit kleineren Abmessungen eingesetzt ist.
Figur 5 zeigt verschiedene perspektivische Darstellungen einer möglichen Lagervorrichtung für Kochtöpfe, entsprechend der vorstehenden Erfindung.
Figur 6 zeigt in perspektivischer Darstellung eine mögliche Ausführungsform eines erfindungsgemäßen Haltegriffes für einen Kochtopf.
Figur 7 zeigt in perspektivischer die Darstellung der Halterung gemäß Figur 5 und den Handgriff gemäß Figur 6, mit dem Handgriff in angehobener Darstellung.
Figur 8 zeigt in perspektivischer Schnittdarstellung entlang der Scharnierachse der Vorrichtung gemäß Figur 7 den Handgriff in abgesenkter Darstellung.
Figur 9 zeigt in perspektivischer Darstellung ein weiteres Ausführungsbeispiel eines erfindungsgemäßen Handgriffes für einen Kochtopf.
Figur 10 zeigt in perspektivischer Darstellung eine weitere Ausführungsform einer erfindungsgemäßen Halterung für einen Kochtopf.
Figur 11 zeigt in perspektivischer Darstellung den Handgriff gemäß Figur 9, sowie die Halterung gemäß Figur 10 in zusammengebauter Darstellung.

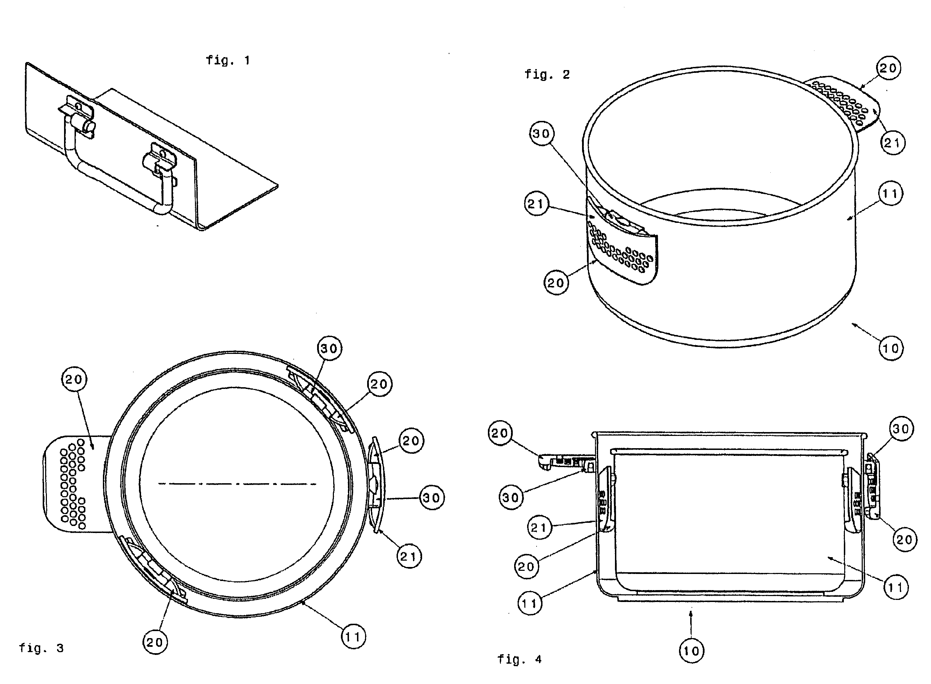

Unter Bezugnahme auf die Figuren 2 bis 8 wird ein Kochtopf 10 dargestellt, der aus einem Behältnis 11 besteht, das im Wesentlichen Zylinderform aufweist.

An den Wänden des Kochtopfes 10 sind in entsprechender Höhenlage zwei Lagerungen 30 angeordnet, die in diametral gegenüberliegender Stellung befestigt sind.

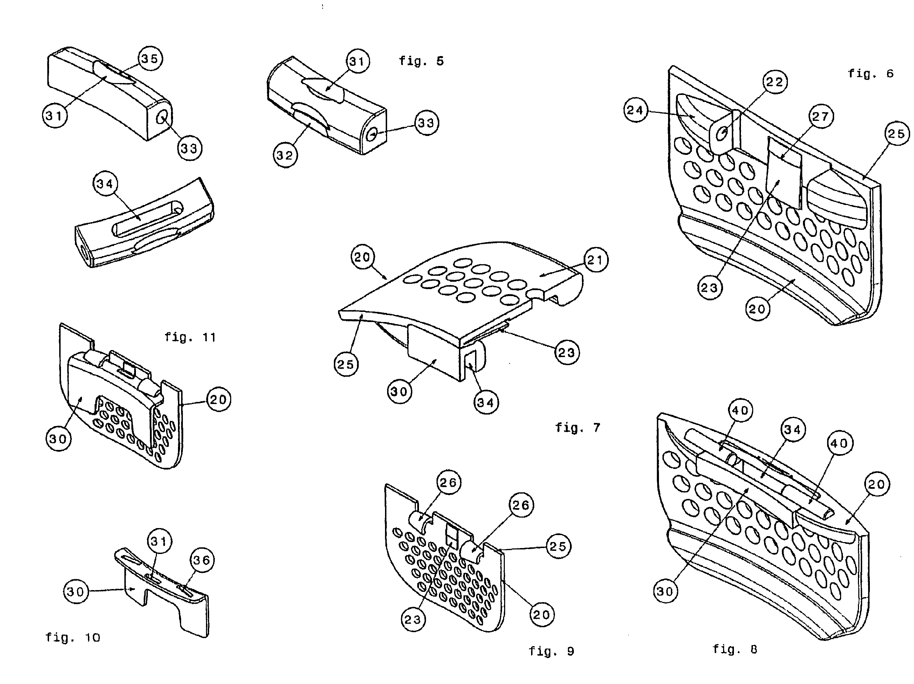

Wie den Figuren 5, 7 und 8 zu entnehmen ist, weisen diese Halterungen zwei Bohrungen 33, eine Nut 34, eine Ausnehmung 31 und einen Hohlraum 32 auf.

Die Handgriffe 20 sind über die Bohrungen 22, die in Verdickungen 24 eingearbeitet sind, mit den Halterungen 30 über Stifte 40, die in Bohrungen 33 eingesetzt sind, verbunden.

Die Nute 34 erleichtert das Einsetzen der Stifte 40.

Wie den Figuren 3 und 4 zu entnehmen ist, sind die Handgriffe 20 in abgesenkter Lage mit den Halterungen 30 verbunden und am Kochtopf 11 befestigt. Diese Halterungen sind von einer zylindrischen Fläche begrenzt, die konzentrisch zum Behälter 11 liegt und mit der Oberfläche 21 übereinstimmt, wodurch der Platzbedarf weiterhin vermindert wird und die Möglichkeit eröffnet wird, den Behälter 10 im Inneren eines anderen Behälters unterzubringen, der einen etwas größeren Durchmesser aufweist.

Es ist einleuchtend, dass die Lagerungen 30, sofern diese an den Wänden des Gefäßes 11 befestigt sind und die Montage der Handgriffe 20 erfolgt ist, durch die Handgriffe gegenüber der Wandung des Gefäßes eine beschränkte Schwenkbewegung um die Achse der Stifte 40 durchführbar ist.

Die Handgriffe 20 können daher eine abgesenkte Stellung, in der sie entlang der Wandung des Kochgefäßes 11 zu liegen kommen, sowie in eine angehobene Stellung in der sie radial von der Wandung des Kochgefäßes abstehen, verschwenkt werden. Dies soweit, bis die Handgriffe mit der Wölbung 25 des Behälters in Berührung treten.

Wie der Figur 7 zu entnehmen ist, kann eine Vorrichtung Verwendung finden, die z.B. aus einer Federzunge 23 besteht, die in die Ausnehmung 31 einragt und ein Zusammentreten der Vorsprünge 27 und 35 ermöglicht, um zu erlauben, die Handgriffe 20 in einer angehobenen Lage zu arretieren und feste Handgriffe zu schaffen, die einfach und sicher erfasst werden können (im Gegensatz zu den Gegebenheiten, die z.B. bei Einrichtungen gemäß Figur 1 eintreten).

Zum Arretieren der Handgriffe 20 ist es ausreichend, auf die Federzunge 23 eine nach oben gerichteten Druck auszuüben und dadurch ein Verschwenken der Handgriffe zu ermöglichen. Ausnehmungen 32 nehmen die Federzungen 23 auf, sobald die Handgriffe in eine abgesenkte Stellung überführt worden sind.

Die Schaffung eines Kochtopfes für gastronomisch gewerblichen Einsatz, entsprechend der Erfindung, wie diese im Vorangegangenen beschrieben ist, ermöglicht in nicht eingeschränkter Weise die Herstellung der Aufnahmelager als gegossenes oder gepresstes einstückiges Metallteil; ferner besteht die Möglichkeit, die Handgriffe aus thermoplastischem Kunststoff zu fertigen (z.B. in nicht einschränkender Weise aus Phenolharz oder fluorierten Polymeren), bei diesen Einrichtungen werden die Federzungen 23 aus dem Bauteil herausgearbeitet.

Eine weitere Ausführungsform, die als Beispiel in den Figuren 9, 10 und 11 dargestellt ist, ist herstellbar, indem die Lagerungen aus einer Metallplatine gefertigt werden, (diese eignet sich in besonders günstiger Weise zur Befestigung an den Wandungen des Behälters 11 durch Elektroschweißen), auch die Handgriffe können in Metalllaminat oder aus thermoplastischem Kunststoff hergestellt werden. Bei dieser Ausführungsform werden die scharnierartigen Bauteile direkt aus dem Lagerteil in Form von Nuten 36 herausgearbeitet und im Handgriff sind kegelstumpfartige Ausbildungen 26 vorgesehen.

Es ist naheliegend, dass die erfindungsgemäßen Kochtöpfe für gewerblich, gastronomischen Einsatz, wie diese bisher dargestellt und beschrieben wurden, nur zwei von möglichen Ausführungsbeispielen darstellen.

Der Beschreibung kann deutlich entnommen werden, dass die wesentlichen Merkmale des Kochtopfes für gewerblichen Einsatz sowie deren vorteilhafte Merkmale folgende sind:
- verminderter Raumbedarf
- Möglichkeit einen Kochtopf im Inneren eines anderen Gefäßes unterzubringen, wobei dieses zweite Gefäß gleiche Form und leicht größere Abmessungen aufweist;
- zuverlässiger Einsatz der Handgriffe;
- einfache Bauweise und einfache Montagemöglichkeit.

Es ist naheliegend, dass der Kochtopf für gewerblichen Einsatz, der die beschriebenen Merkmale aufweist, bauliche Abänderungen erfahren kann, wobei diese gesamthaft unter den beschriebenen Erfindungsgedanken fallen; desweiteren besteht die Möglichkeit, alle beschriebenen dargestellten Bauteile durch äquivalente Bauteile zu ersetzen.

Desweiteren können die eingesetzten Materialen sowie die Bauformen und Abmessungen beliebig gewählt werden, entsprechend den technischen Voraussetzungen.

Der Schutzumfang der Erfindung wird durch die folgenden Patentansprüche definiert.

## Patentansprüche

1. Behälter zum Zubereiten von Speisen, für gewerblichen gastronomischen Einsatz (10), bestehend aus wenigstens einem Behälter (11), der Zylinderform aufweist, mit wenigstens zwei Halterungen (30), die an der Wandung des Behälters (11) befestigt sind, mit wenigstens zwei Handgriffen (20), die mit diesen Halterungen (30) über eine Gelenkverbindung verbunden sind und in wenigstens zwei Stellungen verschwenkbar sind, und zwar in eine Stellung, in der die Handgriffe radial von den Wandungen des Behältnisses (11) abstehen, sowie in eine abgesenkte Lage, in der die Handgriffe längs der Wandung des Behälters angeordnet sind und ein erster Behälter (11) im Inneren eines weiteren Behälters mit entsprechender Form und leicht größeren Abmessungen anordenbar ist und mit einer Vorrichtung, welche die Handgriffe (20) in angehobener Lage blockiert.

2. Behäter, nach Patentanspruch 1, bei dem die Halterungen (30) als einstückiges gepresstes Bauteil aus Metall gefertigt sind und die Handgriffe (20) aus einem thermoplastischen Kunststoff bestehen.

3. Behälter, nach Patentanspruch 1, in dem die Halterungen (30) einstückig als gegossenes Metallteil ausgebildet sind und die Haltegriffe (20) aus thermoplastischen Kunststoff bestehen.

4. Behälter, nach Patentanspruch 1, bei dem die Halterungen (30) aus einem Metalllaminat bestehen und die Handgriffe (20) aus thermoplastischem Kunststoff bestehen.

5. Behälter, nach Patentanspruch 1, bei dem die Lagerungen (30) und die Handgriffe (20) aus metallischem Laminat bestehen.
